# EUROPEAN PATENT SPECIFICATION

(11) **EP 4 080 657 B1**
(45) Date of publication and mention of the grant of the patent: **14.02.2024**
(21) Application number: 22163214.4
(22) Date of filing: 21.03.2022
(51) Int. Cl.: H01M 50/209

(54) **POWER STORAGE MODULE AND METHOD OF MANUFACTURING SAME**
ENERGIESPEICHERMODUL UND VERFAHREN ZUR HERSTELLUNG DAVON
MODULE DE STOCKAGE D'ÉNERGIE ET SON PROCÉDÉ DE FABRICATION

(30) Priority: 21.04.2021 JP 2021071964
(43) Date of publication of application: 26.10.2022
(73) Proprietor: Prime Planet Energy & Solutions, Inc., Chuo-ku Tokyo 103-0022 (JP)
(72) Inventor: MOGI, Yuya, Tokyo, 103-0022 (JP)
(74) Representative: Kuhnen & Wacker Patent- und Rechtsanwaltsbüro PartG mbB

(56) References cited:
- WO-A1-2014/024431
- WO-A1-2020/202669
- WO-A1-2020/202670
- WO-A1-2020/202671

## Description

### BACKGROUND OF THE INVENTION

### Field of the Invention

The present technology relates to a power storage module and a method of manufacturing the power storage module.

### Description of the Background Art

WO 2019/130936 discloses that in a restraint member that restrains a battery stack in an axial direction, a locking block to be brought into abutment with an end plate is spot-welded to a plate-shaped bar.

When spot welding is used as in the structure described in WO 2019/130936, stress concentration may occur at the welded portion. Further, stress concentration may be likely to occur due to dimensional precision of the restraint member.

It is required to increase the strength of the restraint member by employing a structure in which stress concentration is less likely to occur. On the other hand, it is also required to suppress an increase in manufacturing cost. These problems cannot be sufficiently solved necessarily by the conventional restraint member.

### SUMMARY OF THE INVENTION

An object of the present technology is to provide: a power storage module having high strength and allowing for suppression of an increase in manufacturing cost; and a method of manufacturing the power storage module.

A power storage module according to the present technology includes: a plurality of power storage cells stacked along a first direction; an end plate provided at an end of a stack of the plurality of power storage cells; and a restraint member that restrains the end plate and the plurality of power storage cells in the first direction. The restraint member includes a thin portion, a thick portion, and a stepped surface between the thin portion and the thick portion, the thin portion and the thick portion being formed in one piece. The stepped surface is in abutment with the end plate in the first direction.

A method of manufacturing a power storage module according to the present technology includes: stacking a plurality of power storage cells along a first direction; providing an end plate at an end of the plurality of stacked power storage cells; preparing a restraint member; and restraining the end plate and the plurality of power storage cells in the first direction by the restraint member. The preparing of the restraint member includes forming a thin portion and a thick portion in one piece and forming a stepped surface between the thin portion and the thick portion. The stepped surface between the thin portion and the thick portion is in abutment with the end plate in the first direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a basic configuration of a battery pack.
Fig. 2 is a diagram showing battery cells and end plates in the battery pack shown in Fig. 1.
Fig. 3 is a diagram showing a battery cell in the battery pack shown in Fig. 1.
Fig. 4 is a diagram showing a state in which a restraint member in the battery pack shown in Fig. 1 is viewed from the inner surface side.
Fig. 5 is a diagram showing a state in which the restraint member shown in Fig. 4 is attached to an end plate.
Fig. 6 is a flowchart showing an exemplary method of manufacturing the restraint member.
Fig. 7 is a diagram showing a step of preparing a base member.
Figs. 8 to 10 are diagrams showing a hot pressing step.
Fig. 11 is a diagram showing a step of forming an end plate abutment surface (cutting process).
Fig. 12 is a diagram showing a periphery of the end plate abutment surface after the cutting process.
Fig. 13 is a perspective view showing the restraint member in which a thin portion and a thick portion are formed in one piece.
Fig. 14 is a flowchart showing a modification of the method of manufacturing the restraint member.
Fig. 15 is a diagram showing a step forming step by cold forging.
Fig. 16 is a flowchart showing another modification of the method of manufacturing the restraint member.
Fig. 17 is a diagram showing a base member extrusion step.
Fig. 18 is a diagram showing a step of cutting an extruded material.
Fig. 19 is a diagram showing a step of forming an end plate abutment surface (cutting process).
Fig. 20 is a perspective view showing a restraint member in which a thin portion and a thick portion are formed in one piece.
Fig. 21 is a diagram showing an exemplary structure around a stepped portion between the thin portion and the thick portion.
Fig. 22 is a diagram showing another exemplary structure around the stepped portion between the thin portion and the thick portion.
Fig. 23 is a diagram showing a structure of a restraint member according to a reference example.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include another battery such as a nickel-metal hydride battery. In the present specification, the term "electrode" may collectively represent a positive electrode and a negative electrode. Further, the term "electrode plate" may collectively represent a positive electrode plate and a negative electrode plate.

In the present specification, when the terms "power storage device", "power storage cell", or "power storage module" are used, the "power storage device", the "power storage cell", or the "power storage module" is not limited to a battery, a battery cell or a battery module, and may include a capacitor cell or a capacitor module.

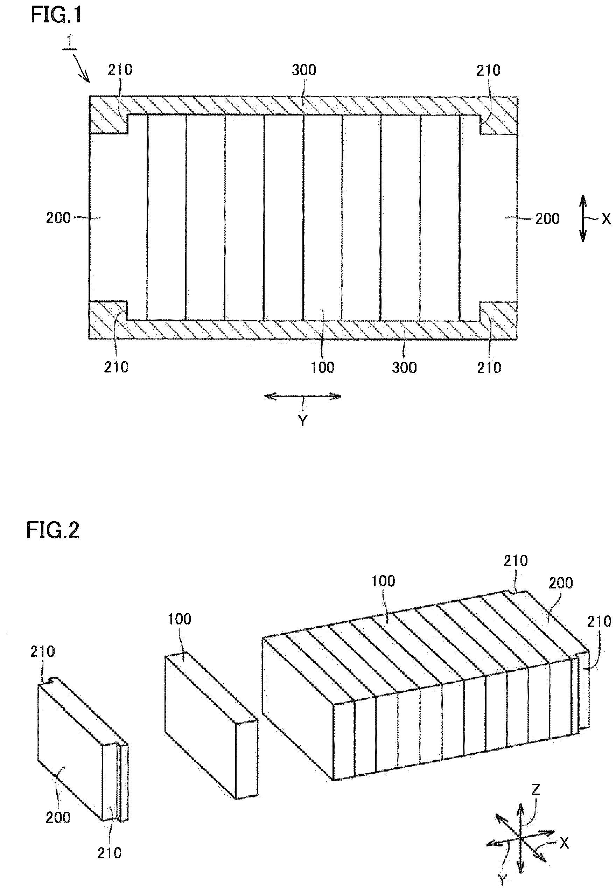

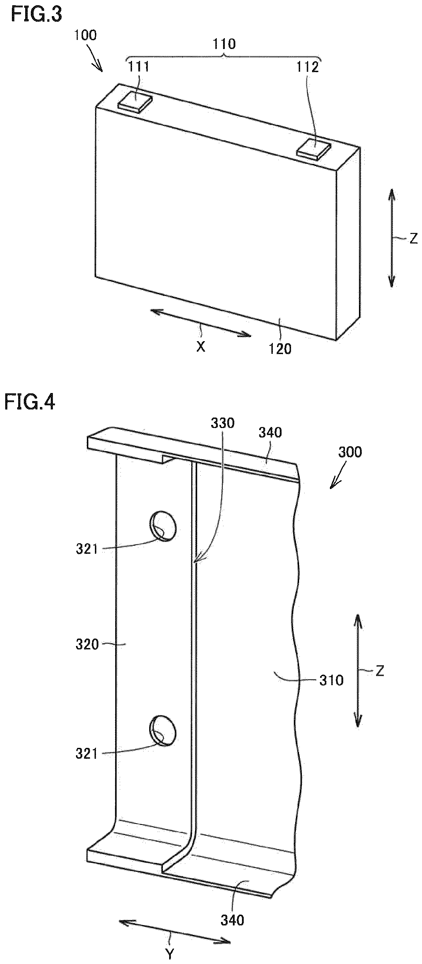

Fig. 1 is a diagram showing a basic configuration of a battery pack 1. Fig. 2 is a diagram showing battery cells 100 and end plates 200 included in battery pack 1. Fig. 3 is a diagram showing battery cell 100 in battery pack 1.

As shown in Figs. 1 and 2, battery pack 1, which serves as an exemplary "power storage module", includes battery cells 100, end plates 200, and a restraint member 300.

The plurality of battery cells 100 are provided side by side in a Y axis direction (first direction). Each of battery cells 100 includes an electrode terminal 110. A separator (not shown) is interposed between the plurality of battery cells 100. The plurality of battery cells 100, which are sandwiched between two end plates 200, are pressed by end plates 200, and are therefore restrained between two end plates 200.

End plates 200 are disposed at both ends of battery pack 1 in the Y axis direction. Each of end plates 200 is fixed to a base such as a case that accommodates battery pack 1. Stepped portions 210 are formed at both ends of end plate 200 in an X axis direction. Stepped portions 210 are formed to extend in a Z axis direction. The X axis direction, the Y axis direction, and the Z axis direction are orthogonal to one another.

End plate 200 is composed of aluminum or cast iron, for example. The material of end plate 200 is not limited to these.

Restraint member 300 connects two end plates 200 to each other. Restraint member 300 is attached to stepped portions 210 formed on two end plates 200.

Restraint member 300 is engaged with stepped portions 210 with compression force in the Y axis direction being exerted to the stack of the plurality of battery cells 100 and end plates 200, and then the compression force is released, with the result that tensile force acts on restraint member 300 that connects two end plates 200 to each other. As a reaction thereto, restraint member 300 presses two end plates 200 in directions of bringing them closer to each other.

Restraint member 300 is composed of aluminum, iron, or stainless steel, for example. The material of restraint member 300 is not limited to these.

As shown in Fig. 3, battery cell 100 is formed to have a rectangular parallelepiped shape with a flat surface. Electrode terminal 110 includes a positive electrode terminal 111 and a negative electrode terminal 112. Positive electrode terminal 111 and negative electrode terminal 112 are arranged side by side in the X axis direction. Electrode terminal 110 is formed on the upper surface of a housing 120 having a prismatic shape. An electrode assembly (not shown) and an electrolyte solution (not shown) are accommodated in housing 120.

When manufacturing battery pack 1, first, the plurality of battery cells 100 are stacked along the Y axis direction. Next, end plates 200 are provided at both ends of stacked battery cells 100. The plurality of battery cells 100 and end plates 200 are restrained in the Y axis direction by restraint member 300.

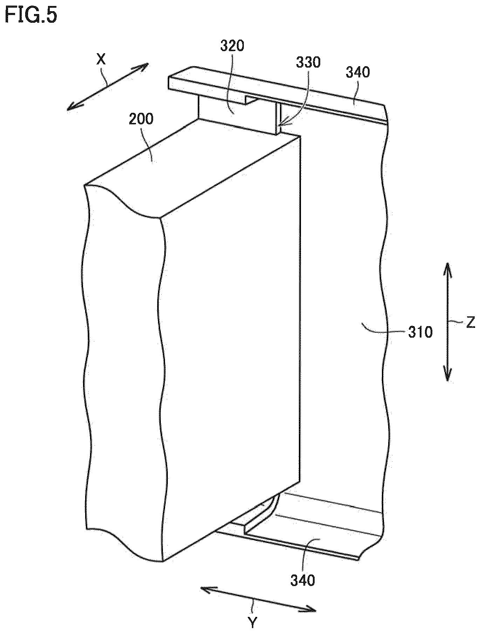

Fig. 4 is a diagram showing a state in which restraint member 300 is viewed from the inner surface side. Fig. 5 is a diagram showing a state in which restraint member 300 is attached to end plate 200.

As shown in Figs. 4 and 5, restraint member 300 includes a thin portion 310 and a thick portion 320. Thin portion 310 and thick portion 320 are formed in one piece. A stepped surface 330 is formed between thin portion 310 and thick portion 320. Stepped surface 330 is in abutment with end plate 200 in the Y axis direction. Thick portion 320 is provided with hole portions 321. Bolts (fixing members) are inserted into hole portions 321. Each of the bolts is screwed into end plate 200, thereby fixing restraint member 300 to end plate 200.

Restraint member 300 includes flange portions 340 extending from beside the side surface of housing 120 of battery cell 100 so as to be located over the upper surface and bottom surface of battery cell 100. Flange portions 340 face the upper surface and bottom surface of housing 120 of battery cell 100. By forming flange portions 340 across the whole of restraint member 300 in the length direction (Y axis direction), rigidity and strength of restraint member 300 are improved.

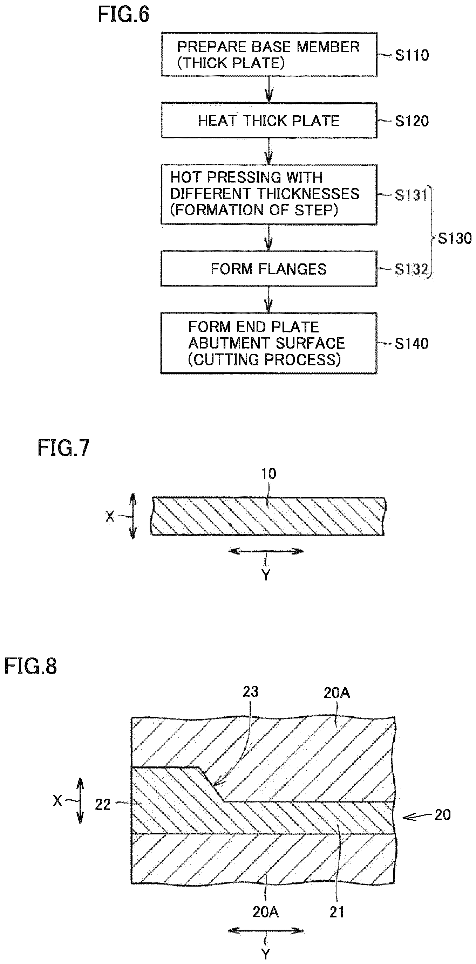

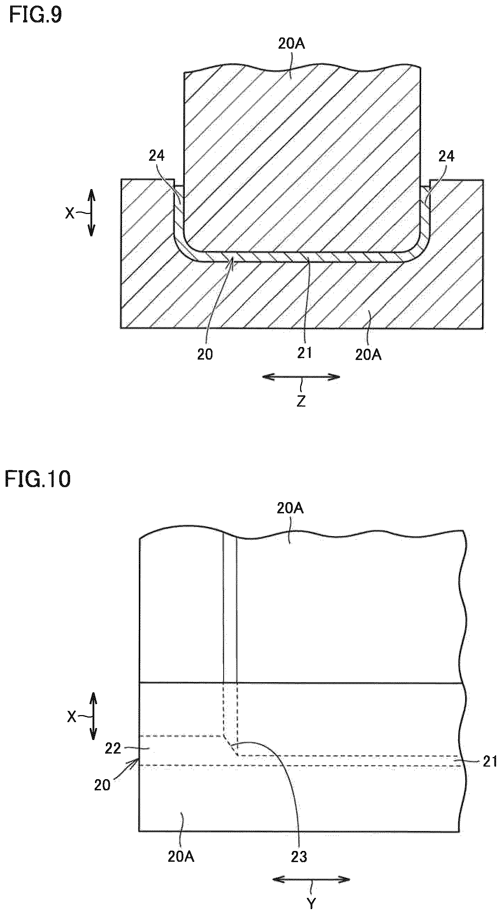

A step of preparing restraint member 300 according to the present embodiment includes forming thin portion 310 and thick portion 320 in one piece and forming stepped surface 330 between thin portion 310 and thick portion 320. An example of this step will be described with reference to Figs. 6 to 13.

Fig. 6 is a flowchart showing an exemplary method of manufacturing restraint member 300. As shown in Fig. 6, the method of manufacturing restraint member 300 includes: a step (S110) of preparing a base member (thick plate); a step (S120) of heating the thick plate; a step (S130) of forming a stepped portion and the flange portions by hot working; and a step (S140) of performing a cutting process onto the surface to be in abutment with end plate 200. The step (S130) of performing the hot working includes: forming a step by hot pressing with different thicknesses (S131); and forming the flange portions (S132). Here, the formation of the stepped portion (S131) and the formation of the flange portions (S132) are performed simultaneously.

As shown in Fig. 7, a base member 10 is prepared (S110) and base member 10 is heated (S120). Next, as shown in Figs. 8 to 10, the hot pressing process (S130) is performed using a die 20A. Figs. 8 to 10 show the steps performed simultaneously. By the hot pressing process shown in Figs. 8 to 10, a member 20 having a thin portion 21, a thick portion 22, a stepped portion 23, and flange portions 24 is formed. Quenching may be performed by a die quenching method or a liquid cooling method.

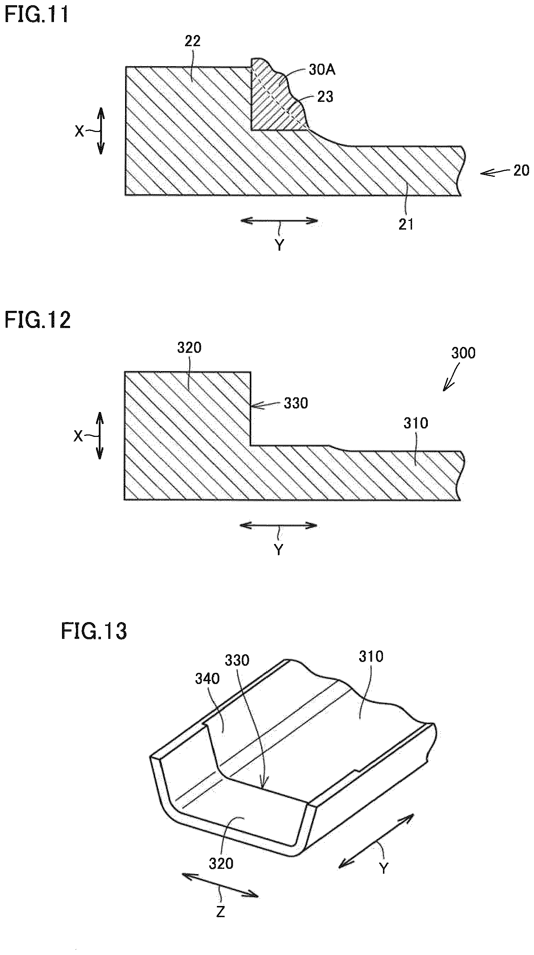

Next, as shown in Fig. 11, a cutting process is performed onto stepped portion 23 using a cutting tool 30A (S140). In this way, restraint member 300 in which stepped surface 330 is formed between thin portion 310 and thick portion 320 is formed as shown in Fig. 12.

With the above steps, restraint member 300 in which thin portion 310, thick portion 320, and flange portions 340 are formed in one piece is formed as shown in Fig. 13. According to the above example, since thin portion 310, thick portion 320, and flange portions 340 are formed by hot working, high-precision processing can be attained. Further, since stepped surface 330 formed by performing the cutting process onto the stepped portion is employed as the surface to be in abutment with end plate 200, an abutment surface having high dimensional precision can be obtained. Further, the strength can be improved by work hardening. As a result, there can be obtained restraint member 300 having high strength or fatigue strength with non-uniformity of stress being suppressed.

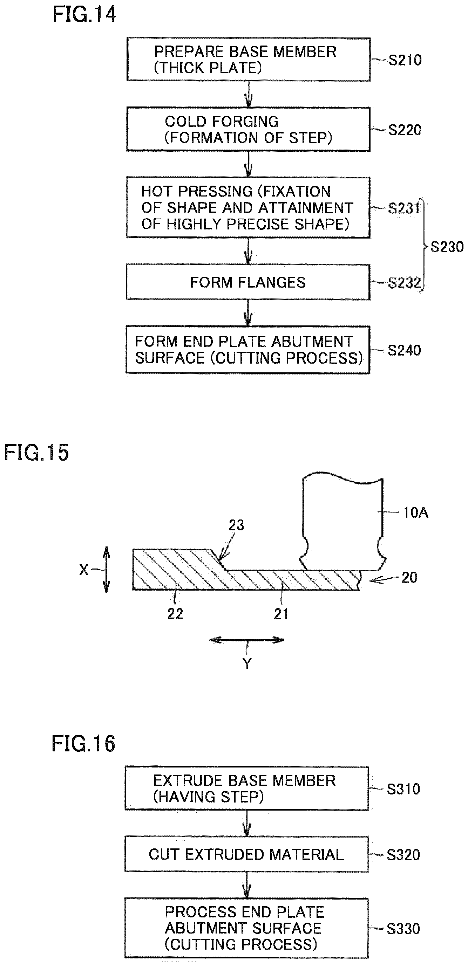

Fig. 14 is a flowchart showing a modification of the method of manufacturing restraint member 300. The method according to the modification shown in Fig. 14 includes: a step (S210) of preparing a base member (thick plate); a step (S220) of forming a stepped portion on the thick plate by cold forging; a step (S230) of performing hot working to fix the shape of the stepped portion and attain a highly precise shape of the stepped portion, and form the flange portions; and a step (S240) of performing a cutting process onto the surface to be in abutment with end plate 200. The step (S230) of performing the hot working includes: fixing the shape of the stepped portion and attaining a highly precise shape of the stepped portion (S231); and forming the flange portions (S232). The fixing and attainment (S231) of the highly precise shape of the stepped portion and the formation (S232) of the flange portions are performed simultaneously.

Fig. 15 is a diagram showing the step (S220) of forming the step by cold forging. As shown in Fig. 15, forging is performed onto a prepared base member 10 using a jig 10A, thereby forming a member 20 having a thin portion 21, a thick portion 22, and a stepped portion 23. Thereafter, the hot working step (S230) and the cutting step (S240) are performed, thereby forming restraint member 300 in which thin portion 310, thick portion 320, and flange portions 340 are formed in one piece.

Fig. 16 is a flowchart showing another modification of the method of manufacturing restraint member 300. The method according to the modification shown in Fig. 16 includes: a step (S310) of extruding a base member having a stepped portion; a step (S320) of cutting the extruded material; and a step (S330) of performing a cutting process onto the surface to be in abutment with end plate 200.

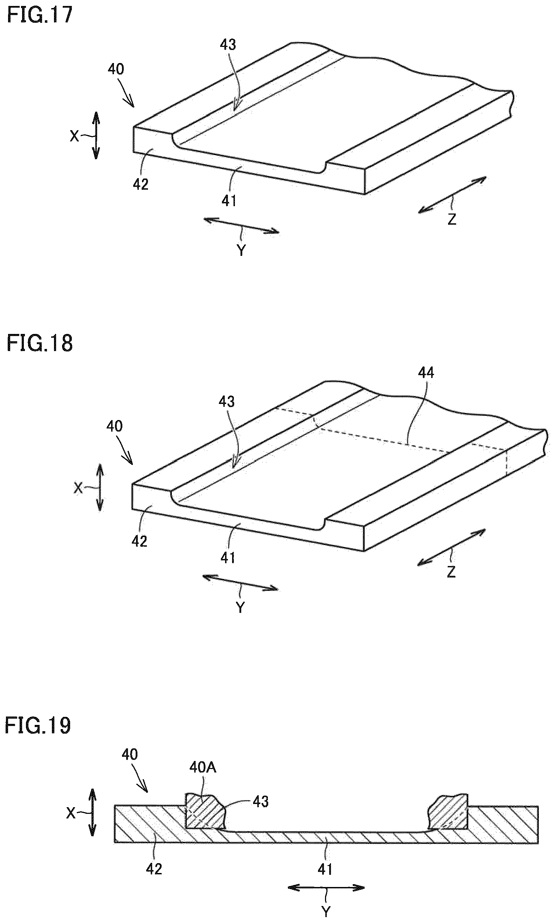

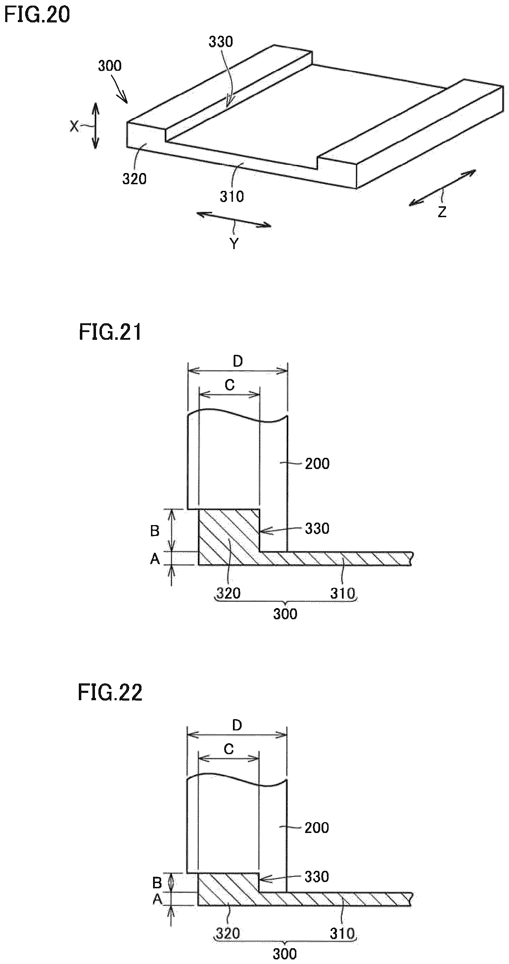

As shown in Fig. 17, a base member 40 having a thin portion 41, a thick portion 42, and a stepped portion 43 is extruded (S310). As shown in Fig. 18, base member 40 (extruded material) is cut at a cutting line 44 (S320). Next, as shown in Fig. 19, a cutting process is performed onto stepped portion 43 using a cutting tool 40A (S330). In this way, restraint member 300 in which stepped surface 330 is formed between thin portion 310 and thick portion 320 is formed as shown in Fig. 20.

Next, referring to Figs. 21 and 22, the following describes a dimensional relation between thin portion 310 and thick portion 320 around the stepped portion. Fig. 21 shows a structure in which the thickness (B) of stepped surface 330 with respect to the thickness (A) of thin portion 310 is comparatively large, and Fig. 22 shows a structure in which the thickness (B) of stepped surface 330 with respect to the thickness (A) of thin portion 310 is comparatively small.

Determination of the thickness (B) of stepped surface 330 is affected by surface pressure of end plate 200 and restraint member 300.

For example, in the case where end plate 200 is composed of a soft material (with a small Young's modulus) such as aluminum, end plate 200 (aluminum) is buckled when the surface pressure of end plate 200 becomes large, so that the thickness of stepped surface 330 needs to be set to be comparatively thick. For example, in the case where end plate 200 is composed of a hard material (with a high Young's modulus) such as cast iron, end plate 200 (cast iron) is less likely to be buckled even when the surface pressure of end plate 200 becomes large, so that the thickness of stepped surface 330 can be set to be comparatively thin.

For example, in the case where restraint member 300 is composed of a soft material (with a small Young's modulus) such as aluminum, restraint member 300 (aluminum) is buckled when the surface pressure of restraint member 300 becomes large, so that the thickness of stepped surface 330 needs to be set to be comparatively thick. For example, when restraint member 300 is composed of a hard material (with a high Young's modulus) such as iron, restraint member 300 (iron) is less likely to be buckled even when the surface pressure of restraint member 300 becomes large, so that the thickness of stepped surface 330 can be set to be comparatively thin.

In the case where at least one of end plate 200 and restraint member 300 is composed of a comparatively soft material such as aluminum, a ratio of the thickness (B) of stepped surface 330 to the thickness (A) of thin portion 310 is preferably more than 1. That is, the thickness (B) of stepped surface 330 is preferably larger than the thickness (A) of thin portion 310. More preferably, the thickness (B) of stepped surface 330 is about three times or more as large as the thickness (A) of thin portion 310.

In the case where each of both end plate 200 and restraint member 300 is composed of a comparatively hard material such as cast iron or iron, the ratio of the thickness (B) of stepped surface 330 to the thickness (A) of thin portion 310 is preferably about 1 or less. That is, preferably, the thickness (B) of stepped surface 330 is approximately less than or equal to the thickness (A) of thin portion 310.

It should be noted that the ratio of the thickness (B) of stepped surface 330 to the thickness (A) of thin portion 310 is not limited to the above range.

As an example, the width (C) of thick portion 320 along the Y axis direction is approximately more than or equal to 7.5 mm and less than or equal to 15.0 mm. It should be noted that the width (C) of thick portion 320 is not limited to the above range.

As an example, the thickness (D) of end plate 200 is approximately more than or equal to 20 mm and less than or equal to 25 mm. It should be noted that the thickness (D) of end plate 200 is not limited to the above range.

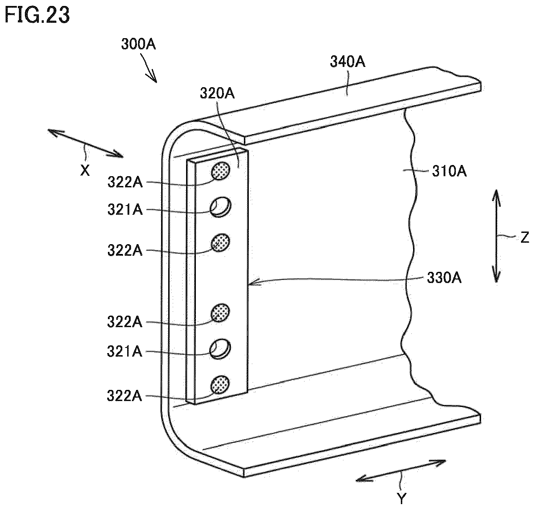

Fig. 23 is a diagram showing a structure of a restraint member 300A according to a reference example. As shown in Fig. 23, restraint member 300A includes a first member 310A (main body member) and a second member 320A (contact plate). Second member 320A is attached to an inner surface of first member 310A. Second member 320A is joined to first member 310A by spot welding.

An end surface of second member 320A in the Y axis direction forms a stepped surface 330A. Stepped surface 330A is in abutment with end plate 200 in the stacking direction (Y axis direction).

First member 310A includes flange portions 340A extending from beside the side surface of housing 120 of battery cell 100 so as to be located over the upper surface and bottom surface of battery cell 100.

Hole portions 321A are provided in first member 310A and second member 320A. Bolts (fixing members) are inserted into hole portions 321A. Each of the bolts is screwed into end plate 200, thereby fixing restraint member 300 to end plate 200. First member 310A and second member 320A are fixed by a plurality of (four in the example of Fig. 23) spot-welded portions 322A arranged side by side in the longitudinal direction (Z axis direction).

In the reference example shown in Fig. 23, since restraint member 300 is constituted of the two members, i.e., first member 310A and second member 320A, the number of components is increased and a process such as the spot welding of first member 310A and second member 320A is required. This can lead to increased processing cost of restraint member 300A. In the reference example shown in Fig. 23, stress concentration tends to occur at a spot-welded portion 322A. On the other hand, restraint member 300 according to the present embodiment is formed by forming thin portion 310 and thick portion 320 in one piece, so that the number of components and the number of manufacturing steps are suppressed from being increased. Further, occurrence of a stress concentration portion such as spot-welded portion 322A of the reference example can be suppressed.

As described above, according to the present embodiment, the restraint member having high strength can be formed at low cost. As a result of measuring, by simulation analysis, stress distributions generated when the same reaction force is applied to restraint member 300 shown in Figs. 4 and 5 and restraint member 300A shown in Fig. 23, the inventors of the present technology have confirmed that the value of the maximum stress in restraint member 300 according to the present embodiment is reduced to be about the half of the value of the maximum stress in restraint member 300A according to the reference example. It should be noted that the scope of the present technology is not limited to one that exhibits the same degree of effect as the above.

Although the embodiments of the present invention have been described and illustrated in detail, it is clearly understood that the same is by way of illustration and example only and is not to be taken by way of limitation, the scope of the present invention being interpreted by the terms of the appended claims.

## Claims

1. A power storage module comprising:
a plurality of power storage cells (100) stacked along a first direction;
an end plate (200) provided at an end of a stack of the plurality of power storage cells (100); and
a restraint member (300) that restrains the end plate (200) and the plurality of power storage cells (100) in the first direction, wherein
the restraint member (300) includes a thin portion (310), a thick portion (320), and a stepped surface (330) between the thin portion (310) and the thick portion (320), the thin portion (310) and the thick portion (320) being formed in one piece, and
the stepped surface (330) is in abutment with the end plate (200) in the first direction.

2. The power storage module according to claim 1, wherein the end plate (200) is composed of aluminum or cast iron.

3. The power storage module according to claim 1 or 2, wherein the restraint member (300) is composed of aluminum, iron, or stainless steel.

4. The power storage module according to any one of claims 1 to 3, wherein
each of the plurality of power storage cells (100) includes an electrode terminal (110) and a housing (120),
the housing (120) has an upper surface on which the electrode terminal (110) is provided, and a bottom surface facing the upper surface, and
each of the thin portion (310) and the thick portion (320) includes a flange portion (340) facing the upper surface and the bottom surface.

5. A method of manufacturing a power storage module, the method comprising:
stacking a plurality of power storage cells (100) along a first direction;
providing an end plate (200) at an end of the plurality of stacked power storage cells (100);
preparing a restraint member (300); and
restraining the end plate (200) and the plurality of power storage cells (100) in the first direction by the restraint member (300), wherein
the preparing of the restraint member (300) includes forming a thin portion (310) and a thick portion (320) in one piece and forming a stepped surface (330) between the thin portion (310) and the thick portion (320), and
the stepped surface (330) between the thin portion (310) and the thick portion (320) is in abutment with the end plate (200) in the first direction.

6. The method of manufacturing the power storage module according to claim 5, wherein the forming of the stepped surface (330) includes performing a cutting process onto a stepped portion (23) between the thin portion (310) and the thick portion (320).

7. The method of manufacturing the power storage module according to claim 5 or 6, wherein the forming of the thin portion (310) and the thick portion (320) in one piece includes performing hot pressing onto a base member (10).

8. The method of manufacturing the power storage module according to claim 5, wherein the forming of the thin portion (310) and the thick portion (320) in one piece includes extruding a member having a stepped portion (23).

## Patentansprüche

1. Energiespeichermodul, aufweisend:
eine Mehrzahl von Energiespeicherzellen (100), die entlang einer ersten Richtung gestapelt sind;
eine Endplatte (200), die an einem Ende eines Stapels der Mehrzahl von Energiespeicherzellen (100) ausgebildet ist; und
ein Einspannelement (300), das die Endplatte (200) und die Mehrzahl von Energiespeicherzellen (100) in der ersten Richtung einspannt, wobei
das Einspannelement (300) einen dünnen Abschnitt (310), einen dicken Abschnitt (320) und eine gestufte Oberfläche (330) zwischen dem dünnen Abschnitt (310) und dem dicken Abschnitt (320) umfasst, wobei der dünne Abschnitt (310) und der dicke Abschnitt (320) aus einem Stück ausgebildet sind, und
die gestufte Oberfläche (330) an die Endplatte (200) in der ersten Richtung angrenzt.

2. Energiespeichermodul nach Anspruch 1, wobei die Endplatte (200) aus Aluminium oder Gusseisen besteht.

3. Energiespeichermodul nach Anspruch 1 oder 2, wobei das Einspannelement (300) aus Aluminium, Eisen oder nichtrostendem Stahl besteht.

4. Energiespeichermodul nach einem der Ansprüche 1 bis 3, wobei
jede der Mehrzahl von Energiespeicherzellen (100) einen Elektrodenanschluss (110) und ein Gehäuse (120) umfasst,
das Gehäuse (120) eine obere Oberfläche aufweist, auf welcher der Elektrodenanschluss (110) ausgebildet ist, und eine untere Oberfläche, welche der oberen Oberfläche zugewandt ist, und
der dünne Abschnitt (310) und der dicke Abschnitt (320) jeweils einen Flanschabschnitt (340) umfassen, welcher der oberen Oberfläche und der unteren Oberfläche zugewandt ist.

5. Verfahren zur Herstellung eines Energiespeichermoduls, wobei das Verfahren aufweist:
Stapeln einer Mehrzahl von Energiespeicherzellen (100) entlang einer ersten Richtung;
Ausbilden einer Endplatte (200) an einem Ende der Mehrzahl von gestapelten Energiespeicherzellen (100);
Vorbereiten eines Einspannelements (300); und
Einspannen der Endplatte (200) und der Mehrzahl von Energiespeicherzellen (100) in der ersten Richtung durch das Einspannelement (300), wobei
das Vorbereiten des Einspannelements (300) umfasst, einen dünnen Abschnitt (310) und einen dicken Abschnitt (320) als ein Stück auszuformen und eine gestufte Oberfläche (330) zwischen dem dünnen Abschnitt (310) und dem dicken Abschnitt (320) auszubilden, und
die gestufte Oberfläche (330) zwischen dem dünnen Abschnitt (310) und dem dicken Abschnitt (320) in der ersten Richtung an die Endplatte (200) angrenzt.

6. Verfahren zum Herstellen des Energiespeichermoduls nach Anspruch 5, wobei das Ausformen der gestuften Oberfläche (330) umfasst, bei einem gestuften Abschnitt (23) zwischen dem dünnen Abschnitt (310) und dem dicken Abschnitt (320) einen Schneideprozess durchzuführen.

7. Verfahren zum Herstellen des Energiespeichermoduls nach Anspruch 5 oder 6, wobei das Ausformen des dünnen Abschnitts (310) und des dicken Abschnitts (320) in einem Stück umfasst, bei einem Grundelement (10) ein Heißpressen durchzuführen.

8. Verfahren zum Herstellen des Energiespeichermoduls nach Anspruch 5, wobei das Ausformen des dünnen Abschnitts (310) und des dicken Abschnitts (320) in einem Stück umfasst, ein Element, das einen gestuften Abschnitt (23) aufweist, strangzupressen.

## Revendications

1. Module de stockage d'énergie comprenant :
une pluralité de cellules de stockage d'énergie (100) empilées le long d'une première direction ;
une plaque d'extrémité (200) prévue au niveau d'une extrémité d'une pile de la pluralité de cellules de stockage d'énergie (100) ; et
un élément de retenue (300) qui retient la plaque d'extrémité (200) et la pluralité de cellules de stockage d'énergie (100) dans la première direction, dans lequel :
l'élément de retenue (300) comprend une partie fine (310), une partie épaisse (320), et une surface étagée (330) entre la partie fine (310) et la partie épaisse (320), la partie fine (310) et la partie épaisse (320) étant formées d'un seul tenant, et
la surface étagée (330) est en butée avec la plaque d'extrémité (200) dans la première direction.

2. Module de stockage d'énergie selon la revendication 1, dans lequel la plaque d'extrémité (200) est composée d'aluminium ou de fonte.

3. Module de stockage d'énergie selon la revendication 1 ou 2, dans lequel l'élément de retenue (300) est composé d'aluminium, de fer ou d'acier inoxydable.

4. Module de stockage d'énergie selon l'une quelconque des revendications 1 à 3, dans lequel :
chacune de la pluralité de cellules de stockage d'énergie (100) comprend une borne d'électrode (110) et un boîtier (120),
le boîtier (120) a une surface supérieure sur laquelle la borne d'électrode (110) est prévue, et une surface inférieure faisant face à la surface supérieure, et
chacune parmi la partie fine (310) et la partie épaisse (320) comprend une partie de bride (340) faisant face à la surface supérieure et à la surface inférieure.

5. Procédé de fabrication d'un module de stockage d'énergie, le procédé comprenant les faits de :
empiler une pluralité de cellules de stockage d'énergie (100) le long d'une première direction ;
prévoir une plaque d'extrémité (200) au niveau d'une extrémité de la pluralité de cellules de stockage d'énergie (100) empilées ;
préparer un élément de retenue (300) ; et
retenir la plaque d'extrémité (200) et la pluralité de cellules de stockage d'énergie (100) dans la première direction par l'élément de retenue (300), dans lequel :
la préparation de l'élément de retenue (300) comprend le fait de former une partie fine (310) et une partie épaisse (320) d'un seul tenant et le fait de former une surface étagée (330) entre la partie fine (310) et la partie épaisse (320), et
la surface étagée (330) entre la partie fine (310) et la partie épaisse (320) est en butée avec la plaque d'extrémité (200) dans la première direction.

6. Procédé de fabrication d'un module de stockage d'énergie selon la revendication 5, dans lequel la formation de la surface étagée (330) comprend le fait de réaliser un processus de coupe sur une partie étagée (23) entre la partie fine (310) et la partie épaisse (320).

7. Procédé de fabrication d'un module de stockage d'énergie selon la revendication 5 ou 6, dans lequel la formation de la partie fine (310) et de la partie épaisse (320) d'un seul tenant comprend le fait de réaliser une pression à chaud sur un élément de base (10).

8. Procédé de fabrication d'un module de stockage d'énergie selon la revendication 5, dans lequel la formation de la partie fine (310) et de la partie épaisse (320) d'un seul tenant comprend le fait d'extruder un élément ayant une partie étagée (23).
